# EUROPÄISCHE PATENTANMELDUNG

(11) **EP 4 817 996 A1**
(43) Veröffentlichungstag der Anmeldung: **07.10.2026**
(21) Anmeldenummer: 26166128.4
(22) Anmeldetag: 19.03.2026
(51) Int. Cl.: B62D 5/00

(54) **VORRICHTUNG ZUR DREHWINKELBEGRENZUNG EINER LENKSPINDEL EINES FAHRZEUGES**

(30) Priorität: 31.03.2025 DE 102025001149
(71) Anmelder: Willi Elbe Gelenkwellen GmbH & Co. KG, 71732 Tamm (DE)
(72) Erfinder: Sedlmeier, Ralf, 74385 Pleidelsheim (DE); Antonov, Aleksandar, 4269 Izbeglii (BG); Hauhoff, Jörg, 72655 Altdorf (DE); Herrlich, Thomas, 85640 Putzbrunn (DE)
(74) Vertreter: Patentanwälte Jackisch-Kohl und Kohl

(57) **Zusammenfassung**

Eine Verstelleinrichtung für Lenksäulen von Fahrzeugen, mit einem längenveränderlichen Lenkstrang, an den ein Lenkelement anschließbar ist, und der zumindest ein erstes und ein zweites Rohr aufweist, die teleskopartig ineinander greifen, wird dadurch weitergebildet, dass zwischen dem äußeren Rohr (2) und dem inneren Rohr (3) eine Vorrichtung zur Drehwinkelbegrenzung (1) angeordnet ist, die einen Drehwinkel des äußeren Rohres (2) gegenüber dem inneren Rohr (3) verschiebefrei auf eine Mehrzahl an Umdrehungen beschränkt.

## Beschreibung

Die Erfindung betrifft eine Vorrichtung zur Drehwinkelbegrenzung einer Lenkspindel eines Fahrzeuges nach dem Oberbegriff des Anspruches 1.

Solche Vorrichtungen haben die Aufgabe, den Drehwinkel der Lenkspindel zu begrenzen. Die Vorrichtungen benötigen allerdings einen erheblich gro-ßen Einbauraum und sind zudem teuer in der Anschaffung.

Der Erfindung liegt die Aufgabe zugrunde, die gattungsgemäße Vorrichtung so auszubilden, dass sie ohne Beeinträchtigung ihrer Funktion nur wenig Einbauraum erfordert und kostengünstig hergestellt werden kann.

Diese Aufgabe wird bei der gattungsgemäßen Vorrichtung erfindungsgemäß mit den kennzeichnenden Merkmalen des Anspruches 1 gelöst.

Bei der erfindungsgemäßen Vorrichtung sind die Anschläge im Mantelrohr befestigt. Dort können sie einfach und raumsparend untergebracht werden. Die Lenkspindel durchsetzt die Anschläge, was zum geringen Raumbedarf besonders beiträgt. Auf der Lenkspindel sitzt die Nuthülse, die längs der Lenkspindel axial verschiebbar, aber drehfest mit ihr verbunden ist und die Gegenanschläge aufweist. Da das fest mit dem Mantelrohr verbundene Eingriffselement in die wendelförmige Nut der Nuthülse eingreift, wird diese beim Drehen der Lenkspindel auf ihr verschoben. Sobald der jeweilige Gegenanschlag mit dem jeweiligen Anschlag im Mantelrohr in Kontakt kommt, ist ein weiteres Drehen der Lenkspindel nicht mehr möglich. Die Nuthülse mit der wendelförmigen Nut trägt zur kompakten Gestaltung bei.

Die Vorrichtung zur Drehwinkelbegrenzung beschränkt den Drehwinkel auf eine bestimmte Anzahl an Umdrehungen. Die Mehrzahl der Umdrehungen lässt sich konstruktiv einstellen. Sie kann volle Umdrehungen, Teilumdrehung oder zusätzlich zu einer oder mehreren vollen Umdrehungen auch Teilumdrehungen umfassen, um den Verdrehwinkel der Lenkspindelgenau einstellen zu können. Die erfindungsgemäße Drehwinkelbegrenzung lässt sich vollständig zwischen dem Mantelrohr und der Lenkspindel unterbringen. Die Lenkspindel kann so im Mantelrohr untergebracht sein, dass sie nicht axial über das Mantelrohr vorsteht.

Die Länge der Nut bestimmt den Verdrehbereich der Lenkspindel. Die Nut erstreckt sich vorteilhaft über einen Winkelbereich von mehr als 360°, vorzugsweise über einen Winkelbereich von 900°. Dadurch lässt sich der Verdrehweg der Lenkspindel gegenüber dem äußeren Rohr grundsätzlich bestimmen.

Die wendelförmige Nut liegt vorteilhaft auf der Mantelfläche der Nut.

Vorteilhafterweise weist das Eingriffselement einen Halter auf, der wenigstens eine Wälzelement, beispielsweise eine Rolle oder eine Wälzkugel, in der wendelförmig verlaufenden Nut hält. Hat die Rolle eine Drehachse, die sich bezüglich der Rohre in radialer Richtung erstreckt, kann der Halter in Verstellrichtung der Rohre reibungsarm in die Nut eingreifen. Denn bei Anlage der Rolle in der Nut in axialer Richtung kann sie an der kontaktierten Seitenwand der Nut abrollen. Dies begünstigt eine leichte Verstellbarkeit der Rohre.

Eine noch leichtere Verstellbarkeit lässt sich erreichen, wenn der Halter mit einer Kugel in die Nut eingreift, weil sie eine Reibung auch gegenüber dem Nutgrund reduziert. Wegen der reibungsverringernden Wirkung des Wälzelementes kann die Steigung der gewendelten Nut geringer ausfallen, was einer kürzere Nuthülse ermöglicht und einer kompakten Bauweise der Drehwinkelbegrenzung zugutekommt.

Bei seiner wendelförmigen Bewegung in der Nut infolge des Verdrehens der Lenkspindel übt das Eingriffselement durch Reibung regelmäßig ein Moment auf die Nuthülse aus. Ein Führungselement, das die Nuthülse zwar axial verschiebbar, aber drehfest führt, nimmt das Moment auf. Das Führungselement wirkt zwischen der Nuthülse und der Lenkspindel und kann grundsätzlich einteilig mit der Nuthülse oder mit der Lenkspindel ausgebildet sein.

Eine störungsfreie Axialbewegung der Nuthülse lässt sich vorteilhaft dadurch erreichen, dass die Lenkspindel mantelseitig eine Axialführung hat, in die das Führungselement von der Nuthülse aus reibungsarm eingreift. Die Axialführung kann beispielsweise in einer am innen- oder außenseitigen Rohrmantel angebrachten Schiene bestehen, die das Führungselement umgreift, oder als Rille oder Nut, in die das Führungselement eingreift.

Eine besonders reibungsarme Axialbewegung lässt sich erreichen, wenn die obige Drehwinkelbegrenzung einen Käfig mit Wälzkörpern als separates Führungselement umfasst, der in eine rillenförmige Axialführung an der Nuthülse eingreift. Das Führungselement ist zwischen der Nuthülse und der Lenkspindel selbstständig bewegbar angebracht. Es greift sowohl in die Axialführung an der Lenkspindel als auch in die Axialführung an der Nuthülse ein. Die vorteilhaft als Kugeln ausgebildeten Wälzelemente sorgen für eine effiziente Reduzierung der Reibung bei der Axialbewegung der Nuthülse auf der Lenkspindel.

Vorteilhaft sind die Anschläge als Ringe ausgebildet, welche die Lenkspindel mit Abstand umgeben. In der Anschlagstellung der Lenkspindel können die Anschlagringe hohe Kräfte sicher aufnehmen.

Bei einer bevorzugten Ausbildung sind an den Anschlagringen Anschlagflächen vorgesehen, die sich quer zur Drehrichtung der Lenkspindel bzw. der Nuthülse erstrecken.

Eine gleichmäßige Belastung der Lenkspindel wird vorteilhaft erreicht, wenn der Anschlagring zwei diametral einander gegenüberliegende Anschlagflächen aufweist.

Zu einer kompakten Bauweise trägt bei, wenn die diametral einander gegenüberliegenden Anschlagflächen durch Wendelflächen miteinander verbunden sind, die in den Stirnseiten der Anschlagringe liegen. Der Anschlagring kann dadurch sehr schmal gehalten werden.

Vorteilhaft weist die Nuthülse Stirnseiten auf, die zumindest annähernd komplementär zu den benachbarten Stirnseiten der ringförmigen Anschläge sind. Dadurch wird die Lenkspindel in der Anschlagstellung zuverlässig blockiert.

Bei einer vorteilhaften Ausführungsform durchsetzt das Eingriffselement das Mantelrohr von seiner Außenseite aus und greift innenseitig in die Nut der Nuthülse ein. Das Eingriffselement kann dadurch von der Außenseite des Mantelrohres aus ein- oder verstellt oder z.B. in einem Verschleiß- oder Schadensfall ausgetauscht werden.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Die Erfindung wird anhand eines in den Zeichnungen dargestellten Ausführungsbeispieles näher erläutert. Es zeigen
- Fig. 1: eine Vorrichtung zur Drehwinkelbegrenzung zwischen dem äußeren, geschnittenen Rohr und dem inneren Rohr einer erfindungsgemäßen Verstelleinrichtung in einer Mittellage,
- Fig. 2: die Drehwinkelbegrenzung gemäß Fig. 1 in einer linken Endstellung,
- Fig. 3: die Drehwinkelbegrenzung gemäß Fig. 1 in einer rechten Endstellung,
- Fig. 4: die Drehwinkelbegrenzung gemäß Fig. 1 in einer teilgeschnittenen Ansicht,
- Fig. 5:: die Drehwinkelbegrenzung gemäß Fig. 1 bzw. 4 in einer Ansicht mit verdeckten Linien,
- Fig. 6: in einer perspektivischen Darstellung die Drehwinkelbegrenzung gemäß Fig. 1 in einer teilgeschnittenen Ansicht,
- Fig. 7: in perspektivischer Darstellung einen Anschlagring der erfindungsgemäßen Vorrichtung,
- Fig. 8: in perspektivischer Darstellung eine Nuthülse der erfindungsgemäßen Vorrichtung,
- Fig. 9: in perspektivischer Darstellung die Nuthülse in Anschlagstellung am Anschlagring.

Die im Folgenden beschriebene Vorrichtung 1 zur Drehwinkelbegrenzung ist Bestandteil eines Lenkstranges einer regelmäßig elektrischen Lenksäulen-Verstelleinrichtung. Der Lenkstrang hat eine Lenkspindel 3, auf deren freiem Ende ein Lenkelement, wie ein Lenkrad, in bekannter Weise befestigt ist.

Die Lenkspindel 3 wird von einem Mantelrohr 2 mit radialem Spiel umgeben. Das Mantelrohr 2 und die Lenkspindel 3 haben die gemeinsame Achse A. Die Lenkspindel 3 ist im Mantelrohr 2 in bekannter Weise drehbar gelagert. Zwischen dem Mantelrohr 2 und der Lenkspindel 3 ist eine Vorrichtung 4 zur Drehwinkelbegrenzung angeordnet, im Folgenden als Drehwinkelbegrenzung 4 bezeichnet. Die Drehwinkelbegrenzung 4 begrenzt die Drehung der Lenkspindel 3 gegenüber dem Mantelrohr 2 auf einen Drehwinkel von beispielsweise 900°.

Die Drehwinkelbegrenzung 4 hat eine im Wesentlichen zylindrische Nuthülse 5, die drehfest, aber axial verschiebbar auf der Lenkspindel 3 sitzt und vom Mantelrohr 2 mit Abstand umgeben ist.

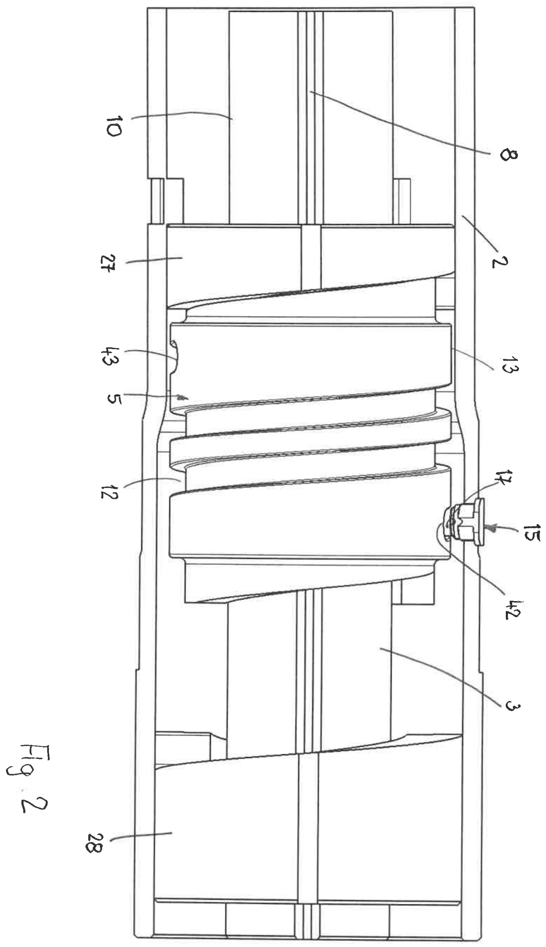

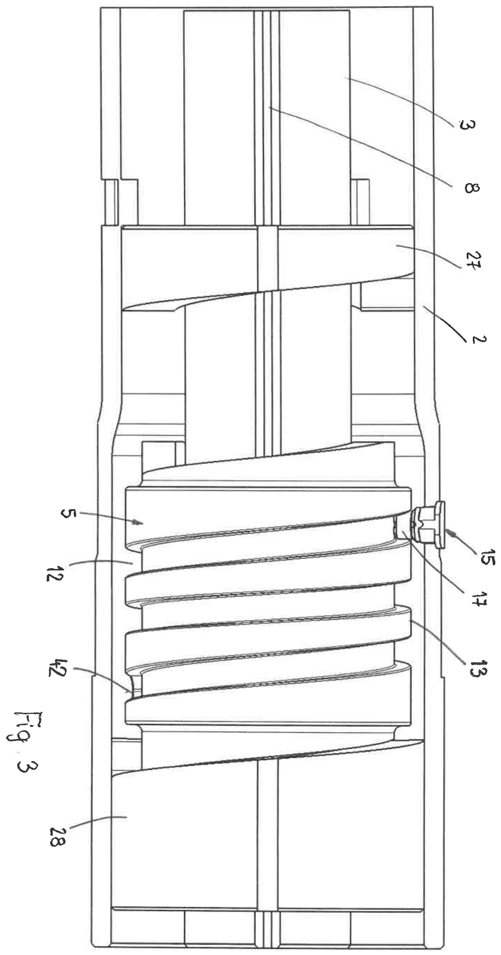

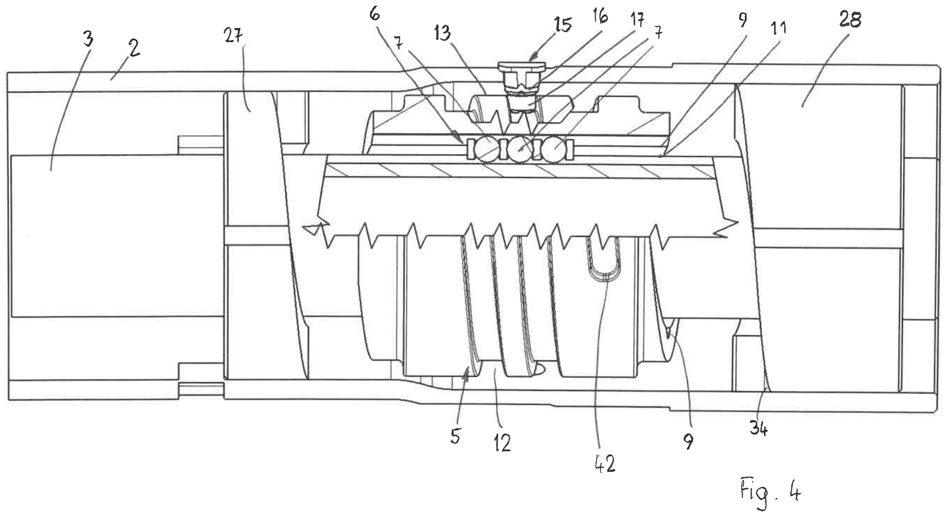

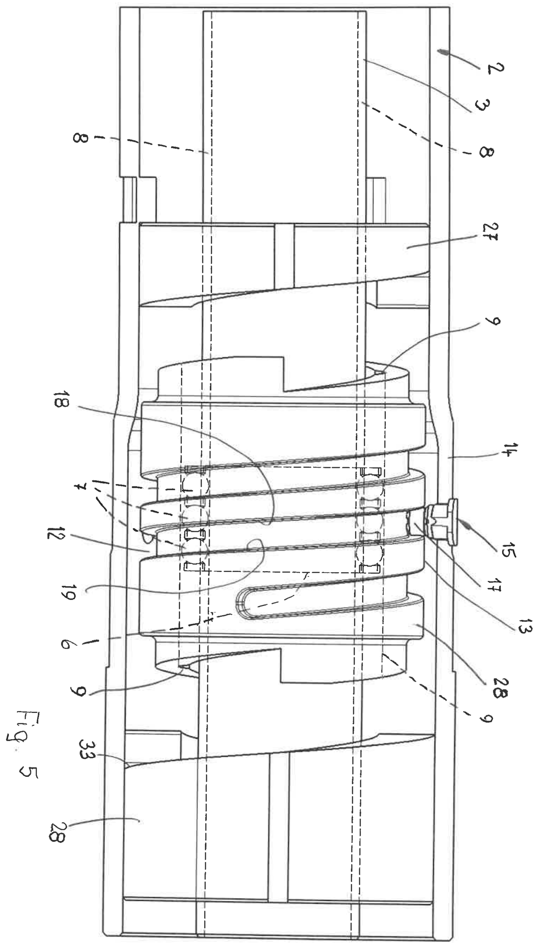

Wie den Fig. 2 und 3 in Draufsicht und den Fig. 4 bis 6 zu entnehmen ist, ist zwischen der Nuthülse 5 und der Lenkspindel 3 ein ringförmiger Käfig 6 mit Wälzkörpern 7, vorzugsweise Wälzkugeln, angebracht. Der Käfig 6 enthält wenigstens zwei an der Lenkspindel 3 einander radial gegenüberliegende Tripel an Wälzkörpern 7, die axial nebeneinander liegen. Sie laufen sowohl in einer außenseitig an der Lenkspindel 3 axial verlaufenden Nut 8 als auch in einer innenseitig in der Nuthülse 5 axial verlaufenden Nut 9.

Die Nut 8 ist in eine außenseitige Mantelfläche 10 der Lenkspindel 3 eingebracht und stellt eine außenseitige Axialführung 8 des Käfiges 6 dar. Die Nut 9 ist in eine innenseitige Mantelfläche 11 der Nuthülse 5 eingeformt und stellt somit eine innenseitige Axialführung 9 des Käfiges 6 in der Nuthülse 5 dar.

Die beiden Axialführungen 8, 9 und der Käfig 6 mit den Wälzkörpern 7 ermöglichen ein axiales Gleiten der Nuthülse 5 auf der Lenkspindel 3. Sie bilden damit ein Führungselement der Nuthülse 5 für ihre axiale Bewegung auf der Lenkspindel 3.

Die Nuthülse 5 hat außenseitig in ihrer Mantelfläche 13 eine gewendelte Nut 12. Die wendelförmige Nut 12 erstreckt sich insgesamt über einen Winkelbereich von 900° bzw. über zweieinhalb Drehungen.

Vom Mantelrohr 2 aus und durch dessen Wandung 14 hindurch ragt ein Eingriffselement 15 radial in die Nut 12. Das Eingriffselement 15 ist im Mantelrohr 2 mit einem Halter 16 ortsfest gehaltert. Der Halter 16 liegt außerhalb der Nut 12 und hält eine Rolle 17, die in die Nut 12 eingreift. Die Rolle 17 ist im Halter 16 um eine bezüglich des Mantelrohres 2, 3 radiale Achse frei drehbar gelagert. Die Rolle 17 wird in Drehung versetzt, sobald sie infolge einer Drehung der Lenkspindel 3 an Seitenwänden 18, 19 der Nut 12 zur Anlage kommt.

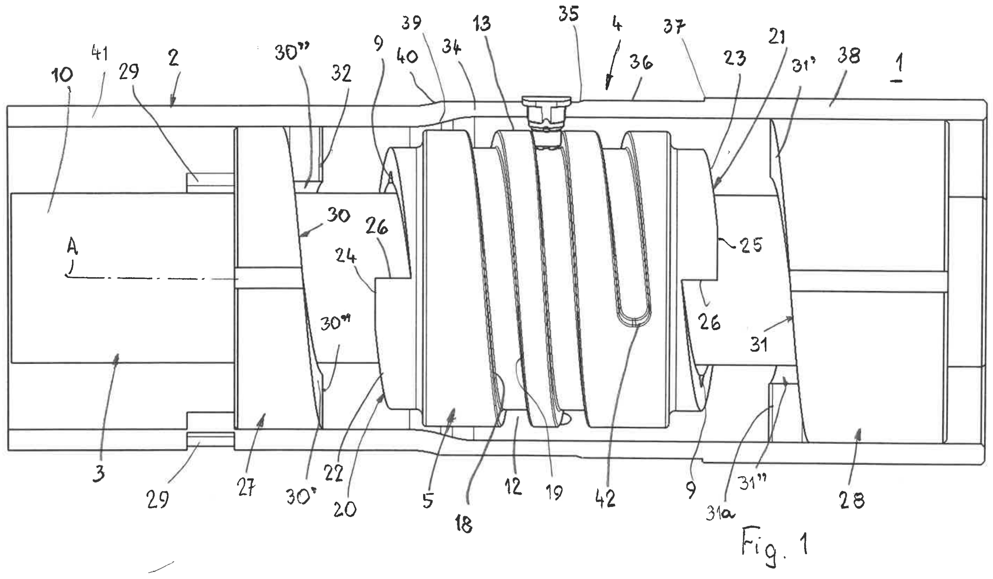

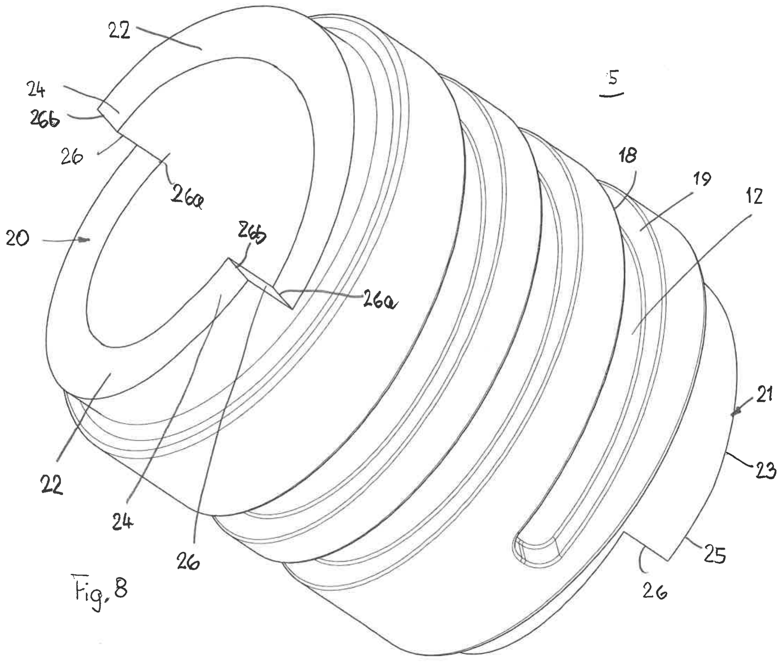

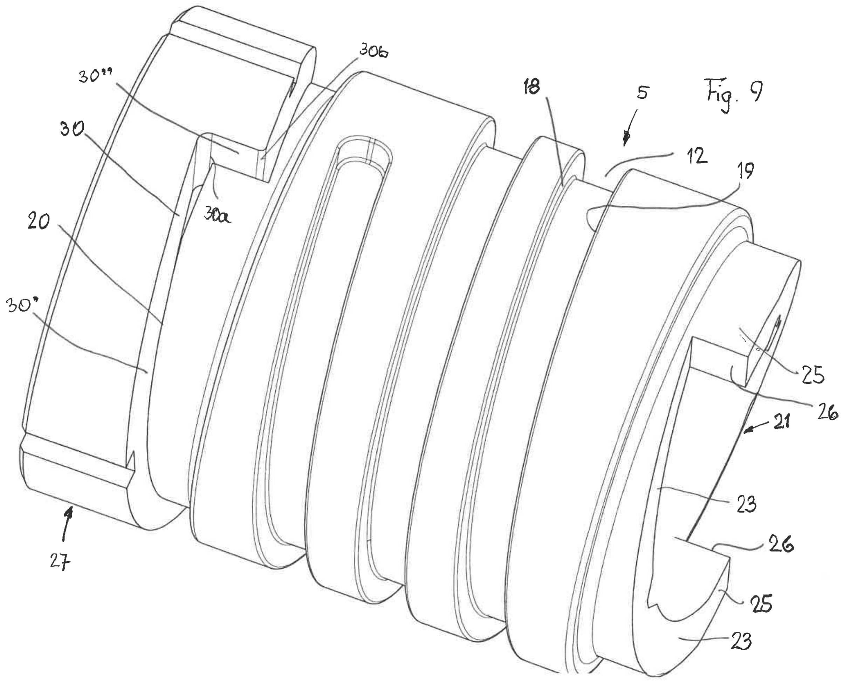

Die Nuthülse 5 hat beidseits Stirnflächen 20, 21, die in einer axialen Draufsicht ringförmig erscheinen (Fig. 8 und 9). Wie in den Fig. 1 bis 6, 8 und 9 zu erkennen, haben sie jeweils Wendelflächen 22, 23 und daran anschließende Radialflächen 24, 25.

Wie aus den Fig. 8 und 9 hervorgeht, erstrecken sich die Wendelflächen 22, 23 mit den zugehörigen Radialflächen 24, 25 jeweils über 180° und gehen an diametral einander gegenüberliegenden Bereichen in Anschlagflächen 26 über, die eben ausgebildet sind und in Axialebenen der Nuthülse 5 liegen. Vorteilhaft liegen die Anschlagflächen 26 in derselben Axialebene der Nuthülse 5.

Die Wendelflächen 22,23 erstrecken sich jeweils vom axial inneren Ende 26a der einen Anschlagfläche 26 aus und schließen mit ihren Radialflächen 24, 25 an das axial äußere Ende 26b der anderen Anschlagfläche 26 an.

Die beiden Stirnseiten 20, 21 der Nuthülse 5 können auch nur die Wendelflächen 22, 23 haben, so dass sich diese zwischen den Enden 26a, 26b der beiden Anschlagflächen 26 erstrecken.

Ausgehend von derselben achsparallelen Mantellinie des Mantels 13 der Nuthülse 5 aus verlaufen die Wendelflächen 22, 23 beispielsweise jeweils rechtsgängig, also im Uhrzeigersinn, und mit konstanter Steigung um die gemeinsame Achse A der Nuthülse 5.

Beidseits der Nuthülse 5 und mit axialem Abstand sind im Mantelrohr 2 Anschlagringe 27, 28 vorgesehen, die vorzugsweise eingepresst und von der Lenkspindel 3 mit Spiel durchsetzt sind. Der schmalere, in den Fig. 1 bis 6 linksseitige Anschlagring 27 stützt sich zusätzlich über einwärts gerichtete Verstemmungen 29 axial am Mantelrohr 2 ab.

Der Anschlagring 27 hat eine Stirnseite 30, die der Stirnseite 20 der Nuthülse 5 zugewandt ist und ihr entsprechend ausgestaltet ist. Auch sie hat zwei Wendelflächen 30', die sich mit konstanter Steigung und beispielsweise rechtsgängig um die Achse A winden und an die jeweils eine Radialfläche 32 anschließt.

Die Wendelflächen 30 und die zugehörigen Radialflächen 32 erstrecken sich jeweils über 180° und gehen an diametral einander gegenüberliegenden Bereichen in Anschlagflächen 30" über. Sie sind eben ausgebildet und liegen in Axialebenen des Anschlagringes 27. Vorteilhaft liegen die Anschlagflächen 30" in derselben Axialebene des Anschlagringes 27.

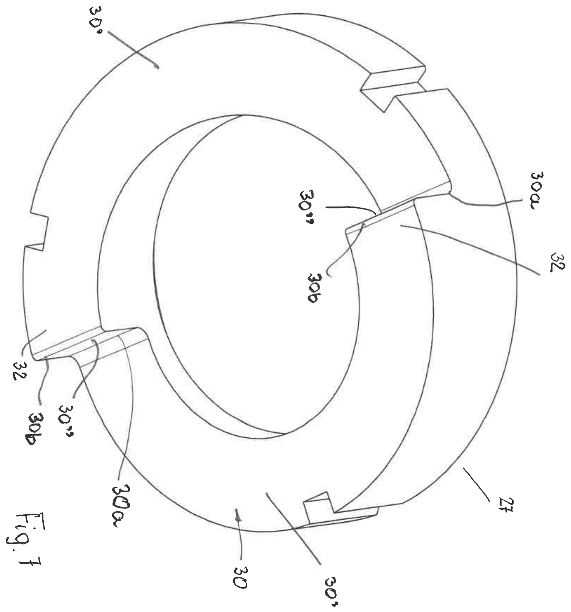

Die Wendeflächen 30" erstrecken sich jeweils vom axial inneren Ende 30a der einen Anschlagfläche 30" aus und schließen mit ihren Radialflächen 32 an das axial äußere Ende 30b der anderen Anschlagfläche 30" an (Fig. 7). Die Stirnseite 30 des Anschlagringes 27 kann auch nur die beiden Wendelflächen 30' haben, die sich zwischen den beiden Enden 30a, 30b der Anschlagflächen 30" erstrecken.

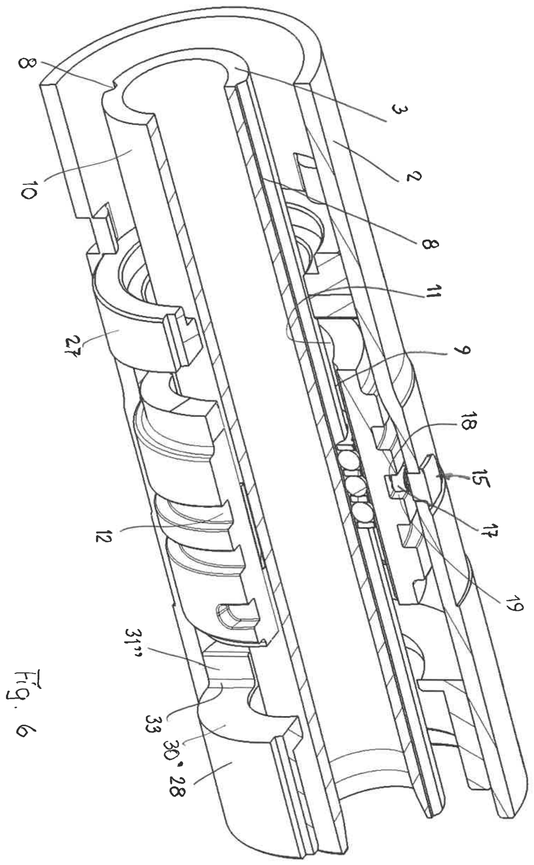

In entsprechender Weise ist die Stirnseite 31 des breiteren, rechtsseitigen Anschlagringes 28 mit den Wendelflächen 31', den Radialflächen 31a, sofern vorgesehen, und den Anschlagflächen 31' und damit komplementär zur Stirnseite 21 der Nuthülse 5 ausgebildet. Wie Fig. 6 für die Anschlagfläche 31" zeigt, können die Anschlagflächen 30", 31" mit einer fertigungstechnisch bedingten Kehle 33 in die Wendelflächen 30', 31' übergehen.

Die komplementär zueinander ausgebildeten Stirnseiten 20, 30 und 21, 31 sind so vorgesehen, dass die Stirnseiten 20, 21 der Nuthülse 5 erst in der Anschlagstellung (Fig. 2 und 3) an den entsprechenden Stirnseiten 30, 31 der Anschlagringe 27, 28 anliegen. Bei der noch zu beschreibenden Axialbewegung und Drehung der Nuthülse 5 können sich die axial vorstehenden Anschlagflächen 26 an den axial vorstehenden Anschlagflächen 30", 31" vorbeibewegen, solange der maximale Drehweg der Lenkspindel 3 noch nicht erreicht ist.

Das Eingriffselement 15 befindet sich in einem Wandabschnitt 34 des Mantelrohres 2 mit konstanter Wanddicke. In Fig. 1 rechts neben dem Eingriffselement 15 nimmt die Wanddicke an einer außenseitigen ringförmigen Kegelstumpffläche 35 geringfügig zu. Der anschließende Wandabschnitt 36 konstanter Dicke geht mit einer außenseitigen Stufe 37 in einen weiteren Wandabschnitt 38 mit größerer Wanddicke über.

Der Innendurchmesser des Mantelrohres 2 ist im Bereich der Wandabschnitte 34 bis 38 konstant. Links des Eingriffselementes 15 verringern sich sowohl der Innendurchmesser an einer innenseitigen Kegelstumpffläche 39 als auch der Außendurchmesser des Mantelrohres 2 an einer außenseitigen Kegelstumpffläche 40, die etwa auf gleicher Höhe liegt wie die innenseitige Kegelfläche 39. Die Neigung der innenseitigen Kegelstumpffläche 39 ist beispielhaft größer als die Neigung der außenseitigen Kegelstumpffläche 40, womit die Wanddicke des Mantelrohres 2 in Fig. 1 in Richtung auf den Anschlagring 27 zunimmt. Der anschließende Wandabschnitt 41 des Mantelrohres 2 hat damit eine größere Dicke als im Bereich der Wandabschnitte 34 bis 36 und hat etwa dieselbe Wanddicke wie der Wandabschnitt 38. Aufgrund der außenseitigen Kegelstumpfflächen 35, 40 und der Stufe 37 ist der Außendurchmesser des Wandabschnittes 41 jedoch kleiner als der Außendurchmesser des Wandabschnittes 38.

Die beschriebene Gestaltung des Mantelrohres 2 ist nur als Beispiel zu verstehen, nicht jedoch als zwingende Vorgabe. Je nach Anwendungsfall und Einbaugegebenheiten kann das Mantelrohr 2 auch andere Ausgestaltungen haben.

Wenn die Lenkspindel 3 in Drehung versetzt wird, dreht auch die drehfest mit ihr verbundene Nuthülse 5. Das Eingriffselement 15 sorgt infolge seines Eingriffes in die Nut 12, dass die Nuthülse 5 auf der Lenkspindel 3 axial verschoben wird. Die Rolle 17 des Eingriffselementes 15 rollt an der Seitenwand 18, 19 der Nut 12 ab und erlaubt ein reibungsarmes Gleiten des Eingriffselementes 15 in der Nut 12, wenn das Eingriffselement 15 an einer der Seitenwände 18, 19 der Nut 12 anliegt. Die Drehung zwingt der Nuthülse 5 per Eingriffselement 15 die axiale Bewegung auf der Lenkspindel 3 auf. Der Käfig 6 mit den Wälzkörpern 7 sorgt für eine reibungsarme Linearbewegung der Nuthülse 5 auf der Lenkspindel 3.

Ausgehend von einer Null-Stellung gemäß Fig. 1, in der sich die Nuthülse 5 in der Mitte zwischen den beiden Anschlagringen 27, 28 befindet, legt die Lenkspindel 3 eine Drehung um maximal 450° zurück, bis das Eingriffselement 15 am Ende 42 oder 43 der Nut 12 angelangt ist. Fig. 2 zeigt die linke Endstellung, in der das Eingriffselement 15 am Ende 42 anliegt und die Nuthülse 5 am linken Anschlagring 27 zur Anlage kommt. Wegen der eineinviertel Umdrehungen zwischen der Null-Stellung der Fig. 1 und der Endstellung der Fig. 2 ist die Ansicht der Fig. 2 um 90° gegenüber der Ansicht der Fig. 1 verdreht, so dass die in Fig. 1 nicht erkennbare Axialführung 8 zu sehen ist.

Dabei liegen nicht nur die Wendelflächen 22, 30' mit ihren Radialflächen 24, 32, sofern vorhanden, aneinander, womit die axiale Linearbewegung der Nuthülse 5 und die Drehung der Lenkspindel 3 beendet ist. Zusätzlich kommen auch die Anschlagflächen 26, 30", 31" aufeinander zur Anlage.

Da die Anschlagflächen 26, 30", 31" diametral einander gegenüberliegen, wird die Lenkspindel 3 in der Anschlagstellung gleichmäßig belastet.

In entsprechender Weise wirkt der rechtsseitige Anschlagring 28, an dessen Anschlagflächen 31" die Anschlagflächen 26 der Nuthülse 5 anliegen. Auch die Wendelflächen 23, 31' und, sofern vorhanden, die Radialflächen 25, 31a liegen in der Endstellung aneinander. Die Wendelfläche 31' korrespondiert mit der Wendelfläche 23 der Nuthülse 5. Liegen die Anschlagflächen 26, 31" in einer rechten Endstellung aneinander an, wie Fig. 3 zeigt, ist eine weitere lineare Bewegung der Nuthülse 5 nach rechts und damit ein weiteres Drehen der Lenkspindel 3 nicht mehr möglich.

Die Anschlagflächen 26, 30", 31" der Nuthülse 5 und der Anschlagringe 27, 28 sind vorteilhaft gleich groß, so dass in der Anschlagstellung eine einwandfreie Kraftübertragung sichergestellt ist.

Die beschriebene Vorrichtung zur Drehwinkelbegrenzung zeichnet sich durch ihre kompakte Gestaltung aus. Sie liegt vollständig zwischen dem Mantelrohr 2 und der Lenkspindel 3. Sie lässt sich damit räumlich flexibel in einer Verstelleinrichtung unterbringen. Sie bietet einen robusten Aufbau, womit sie eine lange Einsatzdauer erwarten lässt.

Die Steigung der Nut 12 und der Wendeflächen 22, 23; 30', 31' lassen sich je nach Einsatzfall optimal aufeinander abstimmen, so dass die Lenkspindel 3 mit der Nuthülse 5 innerhalb des Lenkbereiches einwandfrei gedreht werden kann und in den Anschlagstellungen sicher gegen weiteres Drehen blockiert wird.

## Patentansprüche

1. Vorrichtung zur Drehwinkelbegrenzung einer Lenkspindel (3) eines Fahrzeuges, vorzugsweise eines Elektrofahrzeuges, die von einem Mantelrohr (2) umgeben ist, und mit Anschlägen (27, 28), an denen der Lenkspindel (3) zugeordnete Gegenanschläge (20, 21) zur Anlage kommen, wenn die Lenkspindel (3) ihre Drehendlage erreicht, **dadurch gekennzeichnet, dass** die Anschläge (27, 28) im Mantelrohr (2) befestigt und von der Lenkspindel (3) durchsetzt sind, und dass die Gegenanschläge (20, 21) Teil einer Nuthülse (5) sind, die drehfest, aber axial verschieblich mit der Lenkspindel (3) verbunden ist und eine wendelförmige Nut (12) aufweist, in die wenigstens ein fest mit dem Mantelrohr (2) befestigtes Eingriffselement (15) eingreift.

2. Vorrichtung nach Anspruch 1,
**dadurch gekennzeichnet, dass** die wendelförmig verlaufende Nut (12) auf der Mantelfläche (13) der Nuthülse (5) angeordnet ist und sich über mehr als 360° erstreckt.

3. Vorrichtung nach Anspruch 1 oder 2,
**dadurch gekennzeichnet, dass** das Eingriffselement (15) einen Halter (16) aufweist, der wenigstens ein Wälzelement (17) in der Nut (12) hält.

4. Vorrichtung nach einem der Ansprüche 1 bis 3,
**dadurch gekennzeichnet, dass** die Lenkspindel (3) eine mantelseitige Axialführung (8) hat, in die ein Führungselement (6, 7) eingreift.

5. Vorrichtung nach Anspruch 4,
**gekennzeichnet durch** einen Käfig (6) mit Wälzkörper (7) als Führungselement (6, 7), das in eine Axialführung (9) der Nuthülse (5) eingreift.

6. Vorrichtung nach einem der Ansprüche 1 bis 5,
**dadurch gekennzeichnet, dass** die Anschläge (27, 28) ringförmig ausgebildet sind und die Lenkspindel (3) mit Abstand umgeben.

7. Vorrichtung nach Anspruch 6,
**dadurch gekennzeichnet, dass** die Anschläge (27, 28) Anschlagflächen (30", 31") aufweisen, die sich quer zur Drehrichtung der Lenkspindel (3) bzw. der Nuthülse (5) erstrecken.

8. Vorrichtung nach Anspruch 7,
**dadurch gekennzeichnet, dass** der Anschlag (27, 28) zwei diametral einander gegenüberliegende Anschlagflächen (30", 31") aufweist.

9. Vorrichtung nach Anspruch 8,
**dadurch gekennzeichnet, dass** die Anschlagflächen (30", 31") durch Wendelflächen (30', 31') miteinander verbunden sind, die in Stirnseiten (30, 31) der ringförmigen Anschläge (27, 28) liegen.

10. Vorrichtung nach einem der Ansprüche 1 bis 9,
**dadurch gekennzeichnet, dass** die Nuthülse (5) Stirnseiten (20, 21) aufweist, die zumindest annähernd komplementär zu den benachbarten Stirnseiten (30, 31) der ringförmigen Anschläge (27, 28) ausgebildet sind.

11. Vorrichtung nach einem der Ansprüche 1 bis 10,
**dadurch gekennzeichnet, dass** das Eingriffselement (15) einen Mantel (14) des Mantelrohres (2) von einer Außenseite aus durchsetzt.
